# EUROPÄISCHE PATENTANMELDUNG

(11) **EP 4 711 928 A1**
(43) Veröffentlichungstag der Anmeldung: **18.03.2026**
(21) Anmeldenummer: 24200358.0
(22) Anmeldetag: 13.09.2024
(51) Int. Cl.: G06F 11/07, G07C 5/00, G07C 5/08

(54) **ERKENNEN EINES UNBEKANNTEN UND/ODER UNERWÜNSCHTEN VERHALTENS EINES FAHRZEUGS**

(71) Anmelder: Schmitz Cargobull AG, 48341 Altenberge (DE)
(72) Erfinder: Hagel, Jeremias, 48161 Münster (DE); Ince, Cafer, Dr., 89075 Ulm (DE)
(74) Vertreter: Cohausz & Florack

(57) **Zusammenfassung**

Es wird unter anderem offenbart ein Verfahren ausgeführt durch einen oder mehrere Server (2), wobei das Verfahren umfasst:
- Bereithalten (401) einer digitalen Repräsentation eines Fahrzeugs (101 - 103);
- Empfangen (402) eines ersten Sensordatensatzes, wobei der erste Sensordatensatz Sensordaten umfasst, die durch Fahrzeugsensoren (305) des Fahrzeugs (101 - 103) erfasst wurden, und wobei der erste Sensordatensatz einen ersten Zustand des Fahrzeugs (101 -103) repräsentieren;
- Aktualisieren (403) der digitalen Repräsentation des Fahrzeugs (101 - 103) basierend auf dem ersten Sensordatensatz, um eine aktualisierte digitale Repräsentation des Fahrzeugs (101 - 103) in dem ersten Zustand zu erhalten;
- Erkennen (404), basierend auf der aktualisierten digitalen Repräsentation des Fahrzeugs (101 - 103), eines unbekannten und/oder unerwünschten Verhaltens des Fahrzeugs (101 -103) und/oder einer oder mehrerer Komponenten des Fahrzeugs (101 - 103);
in Reaktion auf das Erkennen des unbekannten und/oder unerwünschten Verhaltens:
- Erzeugen einer Erkennungsinformation, dass ein unbekanntes und/oder unerwünschtes Verhalten erkannt wurde; und/oder
- Erzeugen eines Programmcodes zum Erkennen des unbekannten und/oder unerwünschten Verhaltens durch eine Datenverarbeitungseinheit (3) des Fahrzeugs (101 - 103).

## Beschreibung

### Gebiet

Beispielhafte Ausführungsformen der Erfindung betreffen das Erkennen eines unbekannten und/oder unerwünschten Verhaltens eines Fahrzeugs und/oder einer oder mehrerer Komponenten des Fahrzeugs.

### Hintergrund

Im Stand der Technik sind Fahrzeuge umfassend eine Telematikeinheit bekannt, die in mit einer bestimmten Häufigkeit Telematikdatensätze mit Zustandsinformationen an einen Server senden. Wenn die Telematikeinheit einen Fehlerzustand des Fahrzeugs erkannt hat, können diese Zustandsinformationen beispielsweise einen Fehlercode, der dem erkannten Fehlerzustand zugeordnet ist, enthalten.

### Zusammenfassung einiger beispielhafter Ausführungsformen der Erfindung

Das Erkennen eines Fehlerzustands und das Senden einer entsprechenden Zustandsinformation durch die im Stand der Technik bekannten Telematikeinheiten funktioniert allerdings nur für bekannten Fehlerzustände. Eine Aufgabe der Erfindung ist es daher, diesen Nachteil zu überwinden und eine Lösung bereitzustellen, die auch das erkennen unbekannten Fehlerzustände ermöglicht.

Eine weitere Aufgabe der Erfindung ist es, den Stand der Technik in vorteilhafterweise weiterzubilden.

Gemäß der Erfindung wird ein Verfahren offenbart, wobei das Verfahren durch einen oder mehrere Server ausgeführt wird, und wobei das Verfahren umfasst:
- Bereithalten einer digitalen Repräsentation eines Fahrzeugs;
- Empfangen eines ersten Sensordatensatzes, wobei der erste Sensordatensatz Sensordaten umfasst, die durch Fahrzeugsensoren des Fahrzeugs erfasst wurden, und wobei der erste Sensordatensatz einen ersten Zustand des Fahrzeugs repräsentieren;
- Aktualisieren der digitalen Repräsentation des Fahrzeugs basierend auf dem ersten Sensordatensatz, um eine aktualisierte digitale Repräsentation des Fahrzeugs in dem ersten Zustand zu erhalten;
- Erkennen, basierend auf der aktualisierten digitalen Repräsentation des Fahrzeugs, eines unbekannten und/oder unerwünschten Verhaltens des Fahrzeugs und/oder einer oder mehrerer Komponenten des Fahrzeugs;
in Reaktion auf das Erkennen des unbekannten und/oder unerwünschten Verhaltens:
- Erzeugen einer Erkennungsinformation, dass ein unbekanntes und/oder unerwünschtes Verhalten erkannt wurde; und/oder
- Erzeugen eines Programmcodes zum Erkennen des unbekannten und/oder unerwünschten Verhaltens durch eine Datenverarbeitungseinheit des Fahrzeugs.

Das offenbarte Verfahren wird durch einen oder mehrere Server ausgeführt. Dass das offenbarte Verfahren durch einen Server ausgeführt wird, soll derart verstanden werden, dass der Server das Verfahren allein ausführt; d.h. der Server oder Mittel des Servers führen alle Schritte des Verfahrens aus. Und dass das offenbarte Verfahren durch mehrere Server ausgeführt wird, soll derart verstanden werden, dass die Server das Verfahren gemeinsam ausführen; d.h. die Server oder Mittel der Server kooperieren, um das Verfahren auszuführen. Zum Beispiel kann ein Server einen oder mehrere Schritte des Verfahrens ausführen, und ein anderer Server kann einen oder mehrere andere Schritte des Verfahrens ausführen. Alternativ oder zusätzlich kann auch vorgesehen sein, dass zwei Server kooperieren, um einen oder mehrere Schritte des Verfahrens gemeinsam auszuführen. Die mehreren Server können Teil einer sogenannten Cloud sein.

Dementsprechend wird gemäß der Erfindung ferner ein Server offenbart, wobei der Server Mittel eingerichtet zur Ausführung des offenbarten Verfahrens umfasst. Dabei sind die Mittel des Servers eingerichtet, das Verfahren alleine und/oder in Kooperation mit einem oder mehreren weiteren Servern auszuführen. Zum Beispiel ist der Server Teil einer sogenannten Cloud.

Die Mittel können Hardware- und/oder Software-Komponenten umfassen. Die Mittel können beispielsweise mindestens einen Speicher mit Programmanweisungen eines Computerprogramms (z.B. des unten offenbarten Computerprogramms) und mindestens einen Prozessor ausgebildet zum Ausführen von Programmanweisungen aus dem mindestens einen Speicher umfassen. Dementsprechend soll auch ein Server als offenbart verstanden werden, der zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, den Server zu veranlassen, das offenbarte Verfahren alleine oder in Kooperation mit einem oder mehreren weiteren Servern auszuführen. Es versteht sich, dass der offenbarte Server auch andere nicht aufgeführte Mittel umfassen kann.

Ferner wird ein System offenbart, wobei das System zumindest den offenbarten Server und das Fahrzeug umfasst. Es versteht sich, dass das System auch mehrere der offenbarten Server umfassen kann, z.B. wenn diese Server das offenbarten Verfahren gemeinsam ausführen.

Bei dem Fahrzeug des Systems soll es sich um das Fahrzeug handeln, dessen Fahrzeugsensoren die Sensordaten des ersten Sensordatensatzes erfasst haben. Dementsprechend kann das Fahrzeug beispielsweise Fahrzeugsensoren umfassen. Darüber hinaus kann das Fahrzeug beispielsweise auch die Datenverarbeitungseinheit umfassen.

Ferner wird ein Computerprogramm offenbart, wobei das Computerprogramm Programmanweisungen umfasst, die dazu ausgebildet sind, bei Ausführung durch mindestens einen Prozessor einen Server (z.B. den oben offenbarten Server) zu veranlassen, das offenbarte Verfahren alleine oder in Kooperation mit einem oder mehreren weiteren Servern auszuführen

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Das offenbarte Verfahren, der offenbarte Server, das offenbarte System und das offenbarte Computerprogramm dienen beispielsweise zum Erkennen eines unbekannten und/oder unerwünschten Verhaltens des Fahrzeugs und/oder einer oder mehrerer Komponenten des Fahrzeugs.

Im Folgenden werden die Eigenschaften des offenbarten Verfahrens (im Folgenden auch als "Verfahren" bezeichnet), des offenbarten Servers (im Folgenden auch als 'Server" bezeichnet), des offenbarten Systems (im Folgenden auch als "System" bezeichnet) sowie des offenbarten Computerprogramms (im Folgenden auch als "Computerprogramm" bezeichnet) - teilweise beispielhaft - beschrieben. Es versteht sich, dass das Verfahren, der Server, das System und das Computerprogramm zueinander korrespondieren, so dass die Offenbarung eines Merkmals für eine dieser Kategorien als Offenbarung eines korrespondierenden Merkmals für die anderen Kategorien verstanden werden soll.

Unter dem Bereithalten einer digitalen Repräsentation eines Fahrzeugs soll beispielsweise verstanden werden, dass eine solche digitale Repräsentation in einem Speicher eines der Server gespeichert ist. Beispielsweise kann die digitale Repräsentation in dem Speicher dauerhaft gespeichert sein, z.B. wenn der Speicher ein nicht-flüchtiger Speicher ist. Alternativ ist auch denkbar, dass die digitale Repräsentation in dem Speicher nur zwischengespeichert wird, z.B. wenn der Speicher ein flüchtiger Speicher ist. Insbesondere kann die digitale Repräsentation in einer Datenbank in dem Speicher abgelegt sein, wobei in der Datenbank eine Vielzahl von digitalen Repräsentationen (z.B. eine für jedes Fahrzeug einer Vielzahl von Fahrzeugen wie einer Flotte von Fahrzeugen) abgelegt sind.

Die digitale Repräsentation des Fahrzeugs ist beispielsweise ein digitales Modell (zum Beispiel ein sogenannter digitaler Zwilling) des Fahrzeugs.

Die digitale Repräsentation kann zum Beispiel den Zustand (z.B. den Grundzustand und/oder den Betriebszustand) des Fahrzeugs repräsentieren. Beispielsweise kann für jedes Fahrzeug einer Vielzahl von Fahrzeugen (z.B. einer Flotte von Fahrzeugen eines Herstellers oder Betreibers) eine solche digitale Repräsentation des jeweiligen Fahrzeugs bereitgehalten werden.

Der Zustand des Fahrzeugs kann den Zustand des Fahrzeugs beispielsweise zu einem bestimmten Zeitpunkt beschreiben. Zum Beispiel kann der Zustand des Fahrzeugs den Grundzustand des Fahrzeugs (z.B. zu dem bestimmten Zeitpunkt) und/oder den Betriebszustand des Fahrzeugs (z.B. zu dem bestimmten Zeitpunkt) beschreiben.

Unter dem Grundzustand des Fahrzeugs soll beispielsweise eine Beschreibung (z.B. eine Repräsentation) von (z.B. ausgewählten) Eigenschaften des Fahrzeugs, die sich typischerweise im Betrieb des Fahrzeugs nicht verändern, verstanden werden. Eigenschaften des Fahrzeugs, die sich typischerweise im Betrieb des Fahrzeugs nicht verändern, werden im Folgenden auch als unveränderliche Eigenschaften bezeichnet. Solche unveränderlichen Eigenschaften werden beispielsweise durch das Fahrzeug selbst und/oder die in das Fahrzeug verbauten Komponenten bestimmt. Zum Beispiel kann der Grundzustand im Wesentlichen die unveränderlichen Eigenschaften des Fahrzeugs, die sich aus der Konfiguration und/oder Produktion des Fahrzeugs ergeben, beschreiben. Es handelt sich dabei beispielsweise um technische Daten des Fahrzeugs (wie Tankinhalt, Batteriekapazität, Reifengröße und/oder Fahrzeuggewicht) und/oder Betriebspunkte des Fahrzeugs (wie Soll-Batteriespannung, maximale Batterietemperatur, Soll-Reifendruck und/oder maximale Achslast).

Unter dem Betriebszustand des Fahrzeugs soll beispielsweise eine Beschreibung (z.B. eine Repräsentation) von (z.B. ausgewählten) Eigenschaften des Fahrzeugs, die sich typischerweise im Betrieb des Fahrzeugs verändern, verstanden werden. Eigenschaften des Fahrzeugs, die sich typischerweise im Betrieb des Fahrzeugs verändern, werden im Folgenden auch als veränderliche Eigenschaften bezeichnet. Solche veränderlichen Eigenschaften werden beispielsweise durch den Gebrauch des Fahrzeugs und/oder den Verbrauch von Betriebsmitteln während des Betriebs des Fahrzeugs bestimmt. Es handelt sich dabei beispielsweise um durch Fahrzeugsensoren im Betrieb des Fahrzeugs überwachte Eigenschaften (wie Tankfüllstand, Batteriespannung, Batterietemperatur, Reifendruck und/oder Achslast).

Dementsprechend beschreibt der erste Zustand des Fahrzeugs beispielsweise den Betriebszustand und/oder den Grundzustand des Fahrzeugs zu dem Zeitpunkt zu dem der erste Sensordatensatz erfasst wurde. Insbesondere können die Sensordaten des ersten Sensordatensatzes den Betriebszustands des Fahrzeugs zu dem Zeitpunkt, zu dem der erste Sensordatensatz erfasst wurde, repräsentieren. Wenn die Sensordaten des ersten Sensordatensatzes zu unterschiedlichen Zeitpunkten erfasst wurden, soll als Zeitpunkt zu dem der erste Sensordatensatz erfasst wurde, beispielsweise der Zeitpunkt bestimmt werden, zu dem die letzten Sensordaten des ersten Sensordatensatzes erfasst wurden und/oder zu dem der erste Sensordatensatz empfangen wird.

Die Sensordaten eines Sensordatensatzes (wie die Sensordaten des ersten Sensordatensatzes und/oder die Sensordaten des unten offenbarten zweiten Sensordatensatzes und/oder die Sensordaten der unten offenbarten Trainingsdatensätze) werden/wurden durch verschiedene Sensoren erfasst. Dass Sensordaten eines solchen Sensordatensatzes durch Sensoren erfasst werden/wurden, soll beispielsweise derart verstanden werden, dass jeder der Sensoren jeweilige Sensordaten bereitstellt/bereitgestellt hat und die jeweiligen Sensordaten eine durch den jeweiligen Sensor erfasste Eigenschaft (quantitativ und/oder qualitativ) repräsentieren. Mit anderen Worten können die Sensordaten eines Sensordatensatzes durch verschiedene Sensoren erfasste Eigenschaften (quantitativ und/oder qualitativ) repräsentieren. Bei jeder der durch einen der Sensoren erfassten Eigenschaften kann es sich beispielsweise jeweils um eine physikalische oder chemische Größe handeln.

Die verschiedenen Sensoren sind beispielsweise eingerichtet, die Eigenschaften mit einer bestimmten Häufigkeit (z.B. mit einer bestimmten Frequenz und/oder in bestimmten Zeitabständen) zu erfassen, wobei für verschiedene Sensoren verschiedene Häufigkeiten verwendet werden können. Die erfassten Sensordaten können beispielsweise gesammelt und mit einer bestimmten Häufigkeit (z.B. mit einer bestimmten Frequenz und/oder in bestimmten Zeitabständen) zu einem Sensordatensatz zusammengefasst werden, so dass die Sensordaten eines Sensordatensatzes beispielsweise nur (z.B. alle) Sensordaten umfassen, die erfasst wurden nachdem der vorherige Sensordatensatz zusammengestellt wurde. Zum Beispiel erhält die Datenverarbeitungseinheit des Fahrzeugs die erfassten Sensordaten von den verschiedenen Sensoren, z.B. um sie zu sammeln und zu einem Sensordatensatz zusammenzufassen und/oder um sie weiterzuverarbeiten (z.B. um den unbekannten Zustand zu erkennen).

Solche Sensordaten können beispielsweise von dem Fahrzeug gesammelt und als Sensordatensatz zusammengefasst werden. Anschließend kann der Sensordatensatz von dem Fahrzeug an zumindest einen der Server gesendet werden. Zum Beispiel wird der Sensordatensatz von dem Fahrzeug (z.B. im Falle des ersten Sensordatensatzes und/oder des unten offenbarten zweiten Sensordatensatzes) oder einem oder mehreren Trainingsfahrzeugen (z.B. im Falle der unten offenbarten Trainingsdatensätze über einen Kommunikationspfad an den zumindest einen Server gesendet werden. Unter dem Empfangen eines Sensordatensatzes soll dementsprechend verstanden werden, dass der Sensordatensatz durch den zumindest einen Server über den Kommunikationspfad empfangen wird. Der Kommunikationspfad kann zum Beispiel (i) drahtlos sein oder (ii) zumindest einen drahtlosen Abschnitt umfassen, z.B. wenn das Fahrzeug drahtlos kommuniziert. Es versteht sich, dass der Kommunikationspfad auch zumindest einen drahtgebundenen Abschnitt umfassen kann, z.B. wenn der zumindest eine Server drahtgebunden kommuniziert. Beispiele für einen drahtlosen Kommunikationspfad und/oder einen drahtlosen Abschnitt eines Kommunikationspfads sind eine WLAN- und/oder Mobilfunk-Verbindung. WLAN ist zum Beispiel in den Standards der IEEE-802.11-Familie spezifiziert und derzeit im Internet unter www.ieee.org erhältlich. Unter Mobilfunk sollen insbesondere Mobilfunkkommunikationssysteme wie ein 2G/3G/4G/5G/6G-Kommunikationssystem verstanden werden. Die Spezifikationen der 2G, 3G, 4G, 5G oder 6G Mobilfunkkommunikationssysteme werden derzeit durch das 3rd Generation Partnership Project (3GPP) entwickelt und können derzeit im Internet unter https://www.3gpp.org/ abgerufen werden. Beispiele für einen drahtgebundenen Kommunikationspfad und/oder einen drahtgebundenen Abschnitt eines Kommunikationspfads sind eine Internet-Verbindung und/oder eine Ethernet-Verbindung. Ethernet ist zum Beispiel in den Standards der IEEE-802.3-Familie spezifiziert und derzeit im Internet unter www.ieee.org erhältlich.

Unter den Fahrzeugsensoren des Fahrzeugs, die die Sensordaten des ersten Sensordatensatzes und/oder die Sensordaten des unten offenbarten zweiten Sensordatensatzes erfassen, sollen beispielsweise reguläre Fahrzeugsensoren des Fahrzeugs verstanden werden. Dabei sollen unter regulären Fahrzeugsensoren des Fahrzeugs beispielsweise Fahrzeugsensoren verstanden werden, die serienmäßig in das Fahrzeug eingebaut wurden und/oder die auch in vergleichbaren Fahrzeugen (z.B. in Fahrzeugen mit dem gleichen Grundzustand und/oder mit der gleichen Konfiguration), insbesondere in vergleichbaren verkauften Fahrzeugen, eingebaut wurden/werden. Solche regulären Fahrzeugsensoren unterscheiden sich somit von Zusatzsensoren, mit denen beispielsweise Trainingsfahrzeuge ausgestattet werden/wurden.

Unter dem Aktualisieren der digitalen Repräsentation des Fahrzeugs basierend auf dem ersten Sensordatensatz soll beispielsweise verstanden werden, dass der durch die digitale Repräsentation des Fahrzeugs repräsentierte Betriebszustand des Fahrzeugs entsprechend den Sensordaten des ersten Sensordatensatzes angepasst wird. Als Ergebnis des Aktualisierens wird dann beispielsweise eine aktualisierte digitale Repräsentation des Fahrzeugs erhalten, die den gleichen Betriebszustand des Fahrzeugs wie die Sensordaten des ersten Sensordatensatzes repräsentiert. Zum Beispiel kann die aktualisierte digitale Repräsentation den ersten Sensordatensatz enthalten.

Das Verhalten des Fahrzeugs beschreibt beispielsweise die Veränderung des Betriebszustands des Fahrzeugs zwischen einem Beginnzeitpunkt und einem Endzeitpunkt.

Dass das Erkennen eines unbekannten und/oder unerwünschten Verhaltens des Fahrzeugs und/oder einer oder mehrerer Komponenten des Fahrzeugs aufder aktualisierten digitalen Repräsentation des Fahrzeugs basiert soll beispielsweise derart verstanden werden, dass die aktualisierte digitale Repräsentation des Fahrzeugs bei dem Erkennen berücksichtigt werden soll. Es versteht sich jedoch, dass daneben auch noch andere Informationen bei dem Erkennen berücksichtigt werden können.

Das Erkennen, basierend auf der aktualisierten digitalen Repräsentation des Fahrzeugs, eines unbekannten und/oder unerwünschten Verhaltens des Fahrzeugs und/oder einer oder mehrerer Komponenten des Fahrzeugs kann beispielsweise anhand von vorgegebenen Regeln erfolgen. Zum Beispiel kann das Erkennen eines unbekannten und/oder unerwünschten Verhaltens des Fahrzeugs und/oder einer oder mehrerer Komponenten des Fahrzeugs das Bestimmen der Ähnlichkeit und/oder das Vergleichen des durch die aktualisierte digitale Repräsentation des Fahrzeugs repräsentierten Betriebszustand mit einem oder mehreren bekannten und/oder erwünschten Betriebszuständen umfassen. Der/die bekannten und/oder erwünschten Betriebszustände können beispielsweise vordefiniert sein. Zum Beispiel werden der/die bekannten und/oder erwünschten Betriebszustände zumindest teilweise durch Betriebspunkte des Fahrzeugs (wie Soll-Batteriespannung, maximale Batterietemperatur, Soll-Reifendruck und/oder maximale Achslast) definiert, die durch die digitale Repräsentation des Fahrzeugs beschrieben werden. Die Regeln können beispielsweise vorgeben, dass, wenn das Bestimmen der Ähnlichkeit und/oder das Vergleichen ergibt, dass der aktualisierte Betriebszustand keinem der bekannten und/oder erwünschten Betriebszustände entspricht, ein unbekanntes und/oder unerwünschtes Verhalten erkannt wird. Alternativ können die Regeln beispielsweise auch vorgeben, dass ein unbekanntes und/oder unerwünschtes Verhalten erkannt wird, wenn das Bestimmen der Ähnlichkeit und/oder das Vergleichen ergibt, dass der aktualisierte Betriebszustand zu keinem der bekannten und/oder erwünschten Betriebszustände ähnlich ist (z.B. weil (das/alle) als Ergebnis des Bestimmens der Ähnlichkeit und/oder des Vergleichens erhaltene(n) Ähnlichkeitsmaß(e) einen Schwellwert überschreitet/n). Die Erfindung ist allerdings nicht hierauf beschränkt. Beispielsweise kann das Erkennen auch anhand des unten im Detail offenbarten Erkennungsmodells erfolgen.

In Reaktion auf das Erkennen des unbekannten und/oder unerwünschten Verhaltens soll (i) eine Erkennungsinformation, dass ein unbekanntes und/oder unerwünschtes Verhalten erkannt wurde, erzeugt werden, und/oder (ii) ein Programmcode zum Erkennen des unbekannten und/oder unerwünschten Verhaltens durch eine Datenverarbeitungseinheit des Fahrzeugs erzeugt werden.

Die Erkennungsinformation ist beispielsweise eine Benutzerinformation, die dazu dient, einen Benutzer zu informieren, dass ein unbekanntes und/oder unerwünschtes Verhalten erkannt wurde. Alternativ oder zusätzlich kann aber auch vorgesehen sein, dass die Erkennungsinformation als Grundlage für eine Weiterverarbeitung (z.B. durch zumindest einen der Server und/oder durch einen oder mehrere andere Server) dient.

Der Programmcode zum Erkennen des unbekannten und/oder unerwünschten Verhaltens durch eine Datenverarbeitungseinheit des Fahrzeugs dient beispielsweise dazu, die Datenverarbeitungseinheit des Fahrzeugs in die Lage zu versetzen, das unbekannte und/oder unerwünschte Verhalten zu erkennen.

Zum Beispiel handelt es sich bei dem Programmcode um Anweisungen in einer höheren Programmiersprache wie C++ oder Java und/oder um durch die Datenverarbeitungseinheit des Fahrzeugs direkt ausführbare Anweisungen. Anweisungen in einer höherer Programmiersprache werden auch als Quellcode bezeichnet und müssen typischerweise compiliert und/oder interpretiert werden, damit sie durch die Datenverarbeitungseinheit des Fahrzeugs ausgeführt werden können. Dies ist bei Anweisungen die durch die Datenverarbeitungseinheit des Fahrzeugs direkt ausführbar sind und als Maschinencode bezeichnet werden typischerweise nicht erforderlich. Zum Beispiel kann der Programmcode Anweisungen eines durch die Datenverarbeitungseinheit des Fahrzeugs ausführbaren Computerprogramms und/oder eines Teils eines durch die Datenverarbeitungseinheit des Fahrzeugs ausführbaren Computerprogramms umfassen. Bei dem Computerprogramm kann es sich beispielsweise um ein durch die Datenverarbeitungseinheit ausführbares Diagnoseprogramm und/oder einen Teil der Software der Datenverarbeitungseinheit des Fahrzeugs handeln.

Die Erfindung stellt somit eine Lösung bereit, die es ermöglicht ein unbekanntes und/oder unerwünschtes Verhalten (z.B. einen unbekannten Fehlerzustand) eines Fahrzeugs erstmalig durch einen oder mehrere Server zu erkennen und eine Datenverarbeitungseinheit des Fahrzeugs in die Lage zu versetzen, dieses Verhalten (z.B. diesen Fehlerzustand) zukünftig auch selber zu erkennen.

Weitere Vorteile der offenbarten Erfindung werden nachfolgend anhand beispielhafter Ausführungsformen des offenbarten Verfahrens, des offenbaten Servers, des offenbarten Systems und des offenbarten Computerprogramms beschrieben.

In beispielhaften Ausführungsformen umfasst das Verfahren ferner zumindest einen der folgenden Schritte:
- Ausgeben oder Bewirken des Ausgebens der Erkennungsinformation an einen Benutzer (z.B. einen mit dem Fahrzeug assoziierten Benutzer);
- Bereitstellen der Erkennungsinformation zum Ausgeben an einen Benutzer (z.B. einen mit dem Fahrzeug assoziierten Benutzer);
- Ausgeben und/oder Bereitstellen der Erkennungsinformation zur Weiterverarbeitung;
- Senden des Programmcodes an das Fahrzeug und/oder an eine Vielzahl von Fahrzeugen;
- Bereitstellen des Programmcodes zum Abrufen durch das Fahrzeug und/oder eine Vielzahl von Fahrzeugen.

Wie oben offenbart, kann die Erkennungsinformation eine Benutzerinformation sein, die dazu dient, einen Benutzer zu informieren, dass ein unbekanntes und/oder unerwünschtes Verhalten erkannt wurde. Unter dem Ausgeben einer solchen Erkennungsinformation in Form einer Benutzerinformation soll beispielsweise verstanden werden, dass sie durch Ausgabemittel wie einen Bildschirm und/oder einen Lautsprecher ausgegeben wird. Zum Beispiel kann die Erkennungsinformation als Text und/oder Grafik auf einem Bildschirm angezeigt und/oder als Sprachinformation durch einen Lautsprecher wiedergegeben werden.

Zum Beispiel kann zumindest einer der Server die Erkennungsinformation ausgeben. Alternativ oder zusätzlich kann die Erkennungsinformation auch durch eine andere Vorrichtung (z.B. eine von den Servern verschiedene Vorrichtung) wie eine Benutzervorrichtung ausgegeben werden. Zu diesem Zweck kann das Bewirken des Ausgebens der Erkennungsinformation das Senden der Erkennungsinformation an die andere Vorrichtung umfassen; und/oder das Bereitstellen der Erkennungsinformation zum Ausgeben der Erkennungsinformation kann derart erfolgen, dass die andere Vorrichtung die Erkennungsinformation abrufen kann. Das Senden und/oder Abrufen der Erkennungsinformation kann über einen Kommunikationspfad erfolgen. Der Kommunikationspfad zum Senden und/oder Abrufen der Erkennungsinformation kann beispielsweise (i) drahtgebunden sein oder (iii) zumindest einen drahtgebundenen Abschnitt umfassen, z.B. wenn der zumindest eine Server drahtgebunden kommuniziert. Es versteht sich, dass der Kommunikationspfad auch zumindest einen drahtlosen Abschnitt umfassen kann, z.B. wenn die andere Vorrichtung drahtlos kommuniziert.

Der Benutzer kann beispielsweise ein mit dem Fahrzeug assoziierter Benutzer sein, wie der Fahrer des Fahrzeugs und/oder Eigentümer des Fahrzeugs und/oder ein Betreuer des Fahrzeugs (z.B. ein für das Fahrzeug verantwortlicher Fuhrparkbetreuer). Dementsprechend kann das Verfahren auch ein Bestimmen eines mit dem Fahrzeug assoziierten Benutzers umfassen. Ein solcher mit dem Fahrzeug assoziierter Benutzer kann beispielsweise in einer Datenbank (z.B. einer Datenbank eines ERP-Systems (Enterprise Ressource Planning Systems)) hinterlegt sein, so dass das Bestimmen das Abfragen eines mit dem Fahrzeug assoziierten Benutzers in der Datenbank umfassen kann. Als Ergebnis der Abfrage kann beispielsweise eine Kontaktinformation zum Senden der Erkennungsinformation an eine Benutzervorrichtung des Benutzers und/oder zum Bereitstellen der Erkennungsinformation zum Abrufen durch eine Benutzervorrichtung des Benutzers erhalten werden.

Ferner kann die Erkennungsinformation auch als Grundlage für eine Weiterverarbeitung (z.B. eine datenverarbeitungsmäßige Datenverarbeitung, z.B. durch ein Computerprogramm, dass die Erkennungsinformation als Eingangsdaten erhält) dienen. Zum Beispiel kann die Erkennungsinformation durch zumindest einen der Server und/oder durch eine andere Vorrichtung (z.B. eine von den Servern verschiedene Vorrichtung) weiterverarbeitet werden. Zum Beispiel wird die Erkennungsinformation zu diesem Zweck an den zumindest einen Server und/oder die andere Vorrichtung ausgegeben, z.B. gesendet, und/oder bereitgestellt, z.B. derart zum Abrufen bereitgestellt, dass sie durch den zumindest einen Server und/oder die andere Vorrichtung abgerufen werden kann. Das Senden und/oder Abrufen der Erkennungsinformation kann, wie oben offenbart, über einen Kommunikationspfad erfolgen.

Alternativ oder zusätzlich kann der Programmcode an das Fahrzeug und/oder an eine Vielzahl von Fahrzeugen gesendet werden und/oder derart bereitgestellt werden, dass er durch das Fahrzeug und/oder eine Vielzahl von Fahrzeugen abgerufen werden kann. Zum Beispiel kann zumindest einer der Server den Programmcode senden und/oder zum Abrufen bereitstellen. Das Senden und/oder Abrufen des Programmcodes kann über einen Kommunikationspfad erfolgen. Der Kommunikationspfad zum Senden und/oder Abrufen des Programmcodes kann beispielsweise (i) drahtlos sein oder (ii) zumindest einen drahtlosen Abschnitt umfassen, z.B. wenn das/die Fahrzeug(e) drahtlos kommuniziert/en. Es versteht sich, dass der Kommunikationspfad zum Senden und/oder Abrufen des Programmcodes auch zumindest einen drahtgebundenen Abschnitt umfassen kann, z.B. wenn der zumindest eine Server drahtgebunden kommuniziert.

Der Programmcode kann beispielsweise in Form eines Updates (z.B. eines Updates für eine Software der Datenverarbeitungseinheit des Fahrzeugs und/oder der Vielzahl von Fahrzeugen) gesendet und/oder bereitgestellt werden.

Bei der Vielzahl von Fahrzeugen kann es sich um Fahrzeuge mit dem gleichen Grundzustand und/oder der gleichen Konfiguration wie das Fahrzeug handeln. Dementsprechend kann das Verfahren auch ein Bestimmen der Vielzahl von Fahrzeugen umfassen. Die Vielzahl von Fahrzeugen kann beispielsweise in einer Datenbank (z.B. einer Datenbank eines ERP-Systems (Enterprise Ressource Planning Systems)) hinterlegt sein, so dass das Bestimmen das Abfragen der Vielzahl von Fahrzeugen in der Datenbank umfassen kann. Als Ergebnis der Abfrage können beispielsweise Kontaktinformationen zum Senden des Programmcodes an die Vielzahl von Fahrzeugen und/oder zum Bereitstellen des Programmcodes zum Abrufen durch die Vielzahl von Fahrzeugen erhalten werden.

In beispielhaften Ausführungsformen umfasst der erste Sensordatensatz und/oder der unten offenbarte zweite Sensordatensatz zumindest Sensordaten eines oder mehrerer Fahrzeugsensoren der folgenden Fahrzeugsensortypen:
- Temperatursensor;
- Batteriesensor;
- Spannungssensor;
- Stromsensor;
- Türsensor;
- Tankfüllstandssensor;
- Reifendrucksensor
- Gewichtssensor.

Dementsprechend kann das Fahrzeug zumindest einen oder mehrere dieser Fahrzeugsensoren umfassen.

Vorzugsweise umfassen der erste Sensordatensatz und der zweiten Sensordatensatz Sensordaten der gleichen Fahrzeugsensoren. Es ist allerdings auch denkbar, dass die Sensordaten des ersten Sensordatensatzes und die Sensordaten des zweiten Sensordatensatzes zumindest teilweise von unterschiedlichen Fahrzeugsensoren stammen.

In beispielhaften Ausführungsformen können die Fahrzeugsensoren zumindest teilweise Teil eines elektronischen Bremssystems und/oder einer Transportkältemaschine des Fahrzeugs sein.

In beispielhaften Ausführungsformen erfolgt das Erkennen des unbekannten und/oder unerwünschten Verhaltens anhand eines durch maschinelles Lernen erhaltenen Erkennungsmodells erfolgt. Das Erkennungsmodell ist beispielsweise ein künstliches neuronales Netzwerk, beispielsweise ein künstliches neuronales Netzwerk mit mindestens drei Schichten inklusive der Eingabeschicht und der Ausgabeschicht. Beispiele für ein künstliches neuronales Netzwerk sind neuronale Netzwerke mit Feedforward-Architektur, mehrschichtige Perzeptrons, Convolutional Neural Networks und/oder Recurrent Neural Networks.

Zum Beispiel wird das Erkennungsmodell im Rahmen eines überwachten Lernens trainiert. Beim überwachten Lernen wird das Erkennungsmodell beispielsweise mit Trainingsdatensätzen trainiert, wobei für jeden Trainingsdatensatz vorgegeben ist, ob für den jeweiligen Trainingsdatensatz ein unbekanntes und/oder unerwünschtes Verhalten (oder ein bekanntes Verhalten) erkannt werden soll. Dies macht beispielsweise dann Sinn, wenn der jeweilige Trainingsdatensatz mit einem bekannten Verhalten assoziiert ist, beispielsweise weil der jeweilige Trainingsdatensatz erfasst wurde als sich das jeweilige Fahrzeug in einem bekannten Fehlerzustand befand. Zum Beispiel kann in einem solchen Fall für den jeweiligen Trainingsdatensatz vorgegeben werden, dass der bekannte Fehlerzustand erkannt werden soll.

Es versteht sich, dass das Erkennungsmodell alternativ oder zusätzlich im Rahmen eines unüberwachten Lernens trainiert werden kann. Beim überwachten Lernen wird das Erkennungsmodell beispielsweise mit Trainingsdatensätzen trainiert, ohne dass für jeden Trainingsdatensatz vorgegeben ist, ob für den jeweiligen Trainingsdatensatz ein unbekanntes und/oder unerwünschtes Verhalten (oder ein bekanntes Verhalten) erkannt werden soll.

Es versteht sich jedoch, dass die Erfindung nicht hierauf beschränkt ist.

Zum Beispiel umfasst das Verfahren ferner:
- Trainieren des Erkennungsmodells mit Trainingsdatensätzen.

Zum Beispiel umfasst jeder der Trainingsdatensätze jeweilige Sensordaten, die durch einen oder mehrere der Fahrzeugsensoren und/oder durch einen oder mehrere Zusatzsensoren eines Trainingsfahrzeugs erfasst wurden, wobei jeder der Trainingsdatensätze einen jeweiligen Zustand des jeweiligen Trainingsfahrzeugs repräsentiert. Mit anderen Worten wird zumindest ein Teil der Sensordaten jedes der Trainingsdatensätze durch einen oder mehrere der oben offenbarten Fahrzeugsensoren (z.B. reguläre Fahrzeugsensoren) erfasst; und/oder zumindest ein Teil der Sensordaten jedes der Trainingsdatensätze wird durch einen oder mehrere Zusatzsensoren erfasst.

Wie zuvor erläutert, kann es sich bei den oben offenbarten Fahrzeugsensoren um reguläre Fahrzeugsensoren handeln, die beispielsweise serienmäßig in das Fahrzeug eingebaut wurden und/oder die auch in vergleichbaren Fahrzeugen (z.B. in Fahrzeugen mit dem gleichen Grundzustand und/oder mit der gleichen Konfiguration), insbesondere in vergleichbaren verkauften Fahrzeugen, eingebaut wurden/werden. Solche regulären Fahrzeugsensoren unterscheiden sich somit von Zusatzsensoren, mit denen beispielsweise Trainingsfahrzeuge zusätzlich zu den Fahrzeugsensoren ausgestattet werden können.

Zum Beispiel umfasst zumindest einer der Trainingsdatensätze zumindest Sensordaten eines oder mehrerer von den Fahrzeugsensoren unterschiedlicher Zusatzsensoren (306). Dies soll so verstanden werden, dass die Zusatzsensoren (z.B. ganz oder teilweise) den gleichen Fahrzeugsensortypen wie die Fahrzeugsensoren entsprechen können, solange es sich nicht um die gleichen Sensoren handelt. Zum Beispiel kann zumindest einer der Fahrzeugsensoren ein Spannungssensor sein und ein hiervon unterschiedlicher Zusatzsensor kann ebenfalls ein Spannungssensor sein.

Zumindest ein Teil der Zusatzsensoren kann aber auch anderen Sensortypen wie beispielsweise Dehnmessstreifen und/oder (z.B. zusätzliche und/oder externe) Telemetrieeinheiten (z.B. mit einem oder mehreren Sensoren und einem Speicher zum Zwischenspeichern der durch die Sensoren erfassten Sensordaten während der Fahrt) entsprechen.

Es versteht sich, dass die Trainingsdatensätze von einem Trainingsfahrzeug oder von mehreren Trainingsfahrzeugen stammen können. Jedes der Trainingsfahrzeuge kann (i) einen oder mehrere der Zusatzsensoren und/oder (ii) einen oder mehrere der oben offenbarten Fahrzeugsensoren umfassen. Zum Beispiel kann jedes der Trainingsfahrzeuge zusätzlich zu den oben offenbarten Fahrzeugsensoren des Fahrzeugs einen oder mehrere weitere Zusatzsensoren umfassen.

Daneben kann für jeden der Trainingsdatensätze, wie oben offenbart, vorgegeben sein, ob für den jeweiligen Trainingsdatensatz ein unbekanntes und/oder unerwünschtes Verhalten (oder z.B. ein bekanntes Verhalten) erkannt werden soll. Zum Beispiel wird für einen Trainingsdatensatz vorgegeben, dass für ihn kein unbekanntes und/oder unerwünschtes Verhalten erkannt werden soll, wenn er einen erwarteten Betriebszustand und/oder einen bekannten Fehlerzustand des jeweiligen Trainingsfahrzeugs repräsentiert; wohingegen für einen Trainingsdatensatz vorgegeben wird, dass für ihn ein unbekanntes und/oder unerwünschtes Verhalten erkannt werden soll, wenn er einen unerwarteten Betriebszustand des jeweiligen Trainingsfahrzeugs repräsentiert.

Das Erkennungsmodell kann Teil einer Vielzahl von Erkennungsmodellen sein. Zum Beispiel wird ein Erkennungsmodell nur für Fahrzeuge mit dem gleichen Grundzustand und/oder der gleichen Fahrzeugkonfiguration trainiert. Dementsprechend können die Trainingsdatensätze die Trainingsdatensätze zum Trainieren des Erkennungsmodells von einem oder mehreren Trainingsfahrzeugen mit dem gleichen Grundzustand und/oder der gleichen Fahrzeugkonfiguration wie das Fahrzeug stammen.

In beispielhaften Ausführungsformen erhält das Erkennungsmodell die aktualisierte digitale Repräsentation des Fahrzeugs (z.B. den darin enthaltenen ersten Sensordatensatz) als Eingangsdaten.

In beispielhaften Ausführungsformen gibt das Erkennungsmodell eine Repräsentation des unbekannten und/oder unerwünschten Verhaltens aus.

Zum Beispiel gibt das Erkennungsmodell eine Repräsentation von Sensordatensätzen aus, die in dem Erkennungsmodell mit dem unbekannte und/oder unerwünschte Verhalten assoziiert sind. Dabei soll ein Sensordatensatz als in dem Erkennungsmodell mit dem unbekannten und/oder unerwünschten Verhalten assoziiert verstanden werden, wenn das Erkennungsmodell für eine basierend auf diesem Sensordatensatz aktualisierten digitale Repräsentation des Fahrzeugs das unterwünschte Verhalten erkennt.

Alternativ oder zusätzliche kann das Erkennungsmodell eine Klassifikation des unbekannten und/oder unerwünschten Verhaltens ausgeben. Eine solche Klassifikation kann zum Beispiel eine Fehlerklassifikation wie Systemfehler oder Komponentenfehler (z.B. Batteriefehler, Motorsteuergerätfehler, Reifenfehler, Getriebefehler, usw.) sein.

Zum Beispiel basiert das Erzeugen des Programmcodes auf einer Ausgabe des Erkennungsmodells. Zum Beispiel kann das Erkennungsmodel zumindest einen Teil des Programmcodes oder eine Repräsentation zumindest eines Teils des Programmcodes ausgeben. Zum Beispiel kann das Erkennungsmodell Anweisungen in einer höheren Programmiersprache wie C++ oder Java ausgeben. Diese Anweisungen in der höheren Programmiersprache können den Programmcode oder einen Teil des Programmcodes in Form eines Quellcodes repräsentieren. Diese Anweisungen können dann im Rahmen des Erzeugens des Programmcodes mit anderen Anweisungen in der höheren Programmiersprache kombiniert und/oder kompiliert werden, um den Programmcode in Form von Maschinencode zu erzeugen. Wie oben offenbart, kann der Programmcode Anweisungen eines durch die Datenverarbeitungseinheit des Fahrzeugs ausführbaren Computerprogramms und/oder eines Teils eines durch die Datenverarbeitungseinheit des Fahrzeugs ausführbaren Computerprogramms umfassen. Bei dem Computerprogramm kann es sich beispielsweise um ein durch die Datenverarbeitungseinheit ausführbares Diagnoseprogramm und/oder einen Teil der Software der Datenverarbeitungseinheit des Fahrzeugs handeln. Der Programmcode kann beispielsweise in Form eines Updates (z.B. eines Updates für eine Software der Datenverarbeitungseinheit des Fahrzeugs und/oder der Vielzahl von Fahrzeugen) gesendet und/oder bereitgestellt werden.

Zum Beispiel basiert die Erkennungsinformation auf einer Ausgabe des Erkennungsmodells. Zum Beispiel kann die Erkennungsinformation basierend auf einer Ausgabe des Erkennungsmodells wie der Klassifikation des unbekannten und/oder unerwünschten Verhaltens bestimmt werden. Alternativ und/oder zusätzlich kann das Erkennungsmodel zumindest einen Teil der Erkennungsinformation oder eine Repräsentation zumindest eines Teils der Erkennungsinformation ausgeben.

In beispielhaften Ausführungsformen ist der Programmcode eingerichtet, die Datenverarbeitungseinheit des Fahrzeugs zu veranlassen, den unbekannten Zustand basierend auf durch Fahrzeugsensoren des Fahrzeugs erfassten Sensordaten zu erkennen. Zum Beispiel ist der Programmcode eingerichtet, die Datenverarbeitungseinheit des Fahrzeugs zu veranlassen, den unbekannten Zustand zumindest dann zu erkennen, wenn die Datenverarbeitungseinheit den Programmcode ausführt und einen zweiten Sensordatensatz erhält, wobei der zweite Sensordatensatz Sensordaten umfasst, die durch Fahrzeugsensoren des Fahrzeugs erfasst wurden, und wobei die Sensordaten des zweite Sensordatensatzes den Sensordaten des ersten Datensatzes zumindest im Wesentlichen entsprechen.

Dass die Sensordaten des zweiten Sensordatensatz den Sensordaten des ersten Datensatzes zumindest im Wesentlichen entsprechen soll insbesondere den Fall abdecken, dass die Sensordaten des zweiten Sensordatensatzes identisch zu den Sensordaten des ersten Datensatzes sind. Darüber hinaus sollen durch diese Formulierung auch die Fälle als abgedeckt verstanden werden, in denen es für das Erkennen nicht ins Gewicht fallende Abweichungen zwischen den Sensordaten des zweiten Sensordatensatzes und den Sensordaten des ersten Sensordatensatzes. Zu solche Abweichungen kann es beispielsweise aufgrund von Messungenauigkeiten (z.B. innerhalb eines vorgegebenen Toleranzbereiches) und/oder weil die Sensordaten des zweiten Sensordatensatzes teilweise von anderen (z.B. zusätzlichen und/oder weniger) Fahrzeugsensoren wie die Sensordaten des ersten Sensordatensatzes erfasst wurden.

Das die Datenverarbeitungseinheit den Programmcode ausführt soll beispielsweise derart verstanden werden, dass sich der Programmcode in einem Speicher der Datenverarbeitungseinheit befindet und zumindest ein Prozessor der Datenverarbeitungseinheit Anweisungen des Programmcodes ausführt, die die Datenverarbeitungseinheit veranlassen, den unbekannten Zustand zumindest dann zu erkennen, wenn die Datenverarbeitungseinheit den zweiten Sensordatensatz erhält. Dabei kann der zweite Sensordatensatz durch die Datenverarbeitungseinheit in Form der durch die Fahrzeugsensoren des Fahrzeugs erfassten Sensordaten erhalten werden.

In beispielhaften Ausführungsformen ist das unbekannte und/oder unerwünschte Verhalten mit einem unbekannten Fehlerzustand des Fahrzeugs und/oder der Komponente(n) des Fahrzeugs assoziiert. Bei einem solchen unbekannten Fehlerzustand des Fahrzeugs handelt es sich beispielsweise um einem Betriebszustand des Fahrzeugs, der nicht bekannt ist und der nicht erwünscht ist. Dass das unbekannte und/oder unerwünschte Verhalten mit einem solchen unbekannten Fehlerzustand assoziiert ist, soll beispielsweise derart verstanden werden, dass die aktualisierte digitale Repräsentation des Fahrzeugs einen solchen Zustand repräsentiert.

In beispielhaften Ausführungsformen umfasst das Verfahren ferner:
- Zuordnen eines Fehlercodes zu dem unbekannten und/oder unerwünschten Verhalten, insbesondere dann, wenn es mit einem unbekannten Fehlerzustand des Fahrzeugs und/oder der Komponente(n) des Fahrzeugs assoziiert ist.

Dies ermöglicht es beispielsweise das unbekannte und/oder unerwünschte Verhalten, wenn es noch einmal erkannt wird, zu identifizieren. Zum Beispiel kann die Datenverarbeitungseinheit des Fahrzeugs, wenn sie das unbekannte und/oder unerwünschte Verhalten erkennt, einen entsprechenden Fehlercode an einen der Server senden.

In beispielhaften Ausführungsformen ist das Fahrzeug ein Nutzfahrzeuganhänger.

Ein Nutzfahrzeuganhänger ist zum Beispiel ein Anhänger für einen Lastkraftwagen, wie ein Starrdeichselanhänger oder ein Gelenkdeichselanhänger oder ein Sattelauflieger. Solche Nutzfahrzeuganhänger sind insbesondere für den Transport von Gütern, vorzugsweise Stückgütern, im öffentlichen Straßenverkehr vorgesehen. Zu diesem Zweck weisen Nutzfahrzeuganhänger unterschiedliche Arten von Nutzfahrzeugaufbauten auf, welche der Aufnahme der zu transportierenden Güter in einem Laderaum dienen. So sind beispielsweise Kofferaufbauten mit festen Seitenwänden, einer festen Stirnwand, einer durch Flügeltüren gebildeten Rückwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern. Dementsprechend soll unter einem Nutzfahrzeugaufbau beispielsweise ein Kofferaufbau, ein Planenaufbau und/oder ein Curtainsider verstanden werden.

In beispielhaften Ausführungsformen ist die Datenverarbeitungseinheit des Fahrzeugs eine Telematikeinheit. Dementsprechend kann der erste Sensordatensatz ein durch die Telematikeinheit erzeugter Telematikdatensatz und/oder Teil eines durch die Telematikeinheit erzeugten Telematikdatensatzes sein. Gleichermaßen kann auch der zweite Sensordatensatz ein durch die Telematikeinheit erzeugter Telematikdatensatz und/oder Teil eines durch die Telematikeinheit erzeugten Telematikdatensatzes sein.

Zum Beispiel erhält die Telematikeinheit des Fahrzeugs von den Fahrzeugsensoren erfasste Sensordaten. Zum Beispiel ist die Telematikeinheit des Fahrzeugs eingerichtet, die erhaltenen Sensordaten zu sammeln (z.B. in einem Speicher zwischenzuspeichern) und sie mit einer bestimmten Häufigkeit (z.B. mit einer bestimmten Frequenz und/oder in bestimmten Zeitabständen) in einem Telematikdatensatz zusammenzufassen und den Telematikdatensatz anschließend über den Kommunikationspfad an den zumindest einen der Server (z.B. einen Telematikserver) zu senden.

Ferner kann ein solcher Telematikdatensatz auch weitere Informationen wie einen Fehlercode enthalten. Wenn die Telematikeinheit des Fahrzeugs ein unbekanntes und/oder unerwünschtes Verhalten basierend auf durch Fahrzeugsensoren des Fahrzeugs erfassten Sensordaten erkennt, kann der Telematikdatensatz neben den Sensordaten beispielsweise auch einen dem unbekannten und/oder unerwünschten Verhalten zugeordneten Fehlercode enthalten.

Auch die Trainingsdatensätze können durch entsprechende Telematikeinheiten der Trainingsfahrzeuge als jeweilige Telematikdatensätze über einen jeweiligen Kommunikationspfad an den zumindest einen Server gesendet werden. Alternativ oder zusätzlich kann es auch sein, dass zumindest ein Teil der Sensordaten eines Trainingsdatensatzes während der Fahrt im jeweiligen Trainingsfahrzeug zwischengespeichert und anschließend beispielsweise über eine drahtgebundene Verbindung ausgelesen werden kann.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die Figuren sollen jedoch nur dem Zwecke der Verdeutlichung, nicht aber zur Bestimmung des Schutzbereiches der Erfindung dienen. Die Figuren sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Detaillierte Beschreibung einiger beispielhafter Ausführungsformen

Es zeigen:
- Fig. 1: eine schematische Darstellung einer beispielhaften Ausführungsform eines Systems gemäß der Erfindung;
- Fig. 2: eine schematische Darstellung einer beispielhaften Ausführungsform eines Servers gemäß der Erfindung;
- Fig. 3: eine schematische Darstellung einer beispielhaften Ausführungsform einer Datenverarbeitungseinheit für ein Fahrzeug gemäß der Erfindung;
- Fig. 4: ein Flussdiagramm einer beispielhaften Ausführungsform eines Verfahrens gemäß der Erfindung.

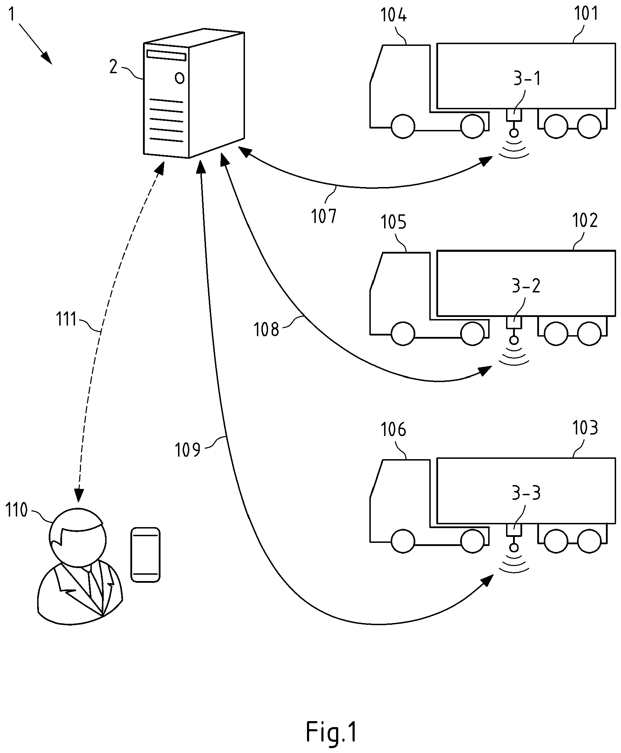

Fig. 1 zeigt eine schematische Darstellung einer beispielhaften Ausführungsform eines Systems gemäß der Erfindung.

Das System 1 umfasst unter anderem eine Vielzahl von Fahrzeugen 101 bis 103. Die Fahrzeuge 101 bis 103 sind in Fig. 1 beispielhaft als Sattelauflieger dargestellt, die von einem der jeweiligen Zugfahrzeuge 104 bis 106 gezogen werden. Ferner umfasst das System 1 einen von den Sattelaufliegern 101 bis 103 und den Zugfahrzeugen 104 bis 106 entfernten Server 2. Es versteht sich, dass das System auch mehrere Server 2 und/oder eine Cloud umfassen könnte. Im Folgenden wird jedoch beispielhaft davon ausgegangen, dass das System nur den Server 2 umfasst.

In Fig. 1 sind jeweilige Kommunikationspfade 107 bis 109 zwischen den Sattelaufliegern 101 bis 103 und dem Server 2 dargestellt. Über den Kommunikationspfad 107 können der Sattelaufliegers 101 und der Server 2 Informationen (z.B. Telematikdatensätze und/oder Softwareupdates) austauschen (z.B. senden und empfangen). In gleicher Weise können die Sattelauflieger 102 und 103 und der Server 2 über den jeweiligen der Kommunikationspfade 108 und 109 (z.B. Telematikdatensätze und/oder Softwareupdates) austauschen (z.B. senden und empfangen). Zum Beispiel umfasst jeder der Sattelauflieger 101 bis 103 eine jeweilige Telematikeinheit 3 (vgl. 3-1, 3-2 und 3-3), die eingerichtet ist, um mit dem Server 2 über den jeweiligen Kommunikationspfad Informationen auszutauschen.

Im Folgenden wird beispielhaft davon ausgegangen, dass jeder der Kommunikationspfade 107 bis 109 eine jeweilige drahtlose Verbindung wie eine WLAN- und/oder Mobilfunk-Verbindung umfasst.

Es versteht sich, dass jeder der Kommunikationspfade 107 bis 109 neben der drahtlosen Verbindung auch eine drahtgebundene Verbindung über ein drahtgebundenes Kommunikationsnetzwerk wie ein Ethernet-Netzwerk und/oder das Internet umfassen kann. Der Informationsaustausch über die Kommunikationspfade 107 bis 109 kann verschlüsselt erfolgen.

Zusätzlich ist in Fig. 1 eine Benutzervorrichtung 110 eines Benutzers wie eines Fuhrparkbetreuers optional dargestellt. Zum Beispiel gehören die Sattelauflieger 101, 102 und 103 zu einem von dem Benutzer 110 betreuten Fuhrpark. Der Server 2 kann mit der Benutzervorrichtung 110 des Benutzers über den optionalen Kommunikationspfad 111 kommunizieren.

Die Telematikeinheiten 3-1, 3-2 und 3-3 der Sattelauflieger 101 bis 103 senden mit einer bestimmten Häufigkeit (z.B. mit einer bestimmten Frequenz und/oder in bestimmten Zeitabständen) Telematikdatensätze über die Kommunikationspfade 107 bis 109 an den Server 2. Der Server 2 kann über die Kommunikationspfade 107 bis 109 beispielsweise Softwareupdates an die Telematikeinheiten 3-1, 3-2 und 3-3 der Sattelauflieger 101 bis 103 senden. Ferner kann der Server 2 über den Kommunikationspfad 111 eine Bernutzerinformation an die Benutzervorrichtung 111 senden.

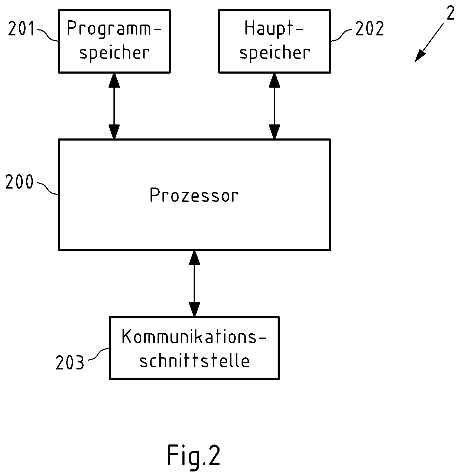

Fig. 2 zeigt eine schematische Darstellung einer Ausführungsform eines Servers 2 gemäß der Erfindung. Im Folgenden wird beispielhaft davon ausgegangen, dass der Server 2 des in Fig. 1 dargestellten Systems 1 diesem in Fig. 2 dargestellten Server 2 entspricht.

Der Server 2 umfasst einen Prozessor 200 und verbunden mit dem Prozessor 200 einen ersten Speicher als Programmspeicher 201, einen zweiten Speicher als Hauptspeicher 202 und eine Netzwerkschnittstelle 203.

Unter einem Prozessor soll beispielsweise ein Mikroprozessor (Engl. Central Processing Unit, CPU), eine Mikrokontrolleinheit, ein Mikrocontroller, ein digitaler Signalprozessor (DSP), eine Anwendungsspezifische Integrierte Schaltung (ASIC), ein Field Programmable Gate Array (FPGA), oder ein graphischer Prozessor (Engl: Graphics Processing Unit, GPU) verstanden werden. Es versteht sich, dass die Servervorrichtung 2 auch mehrere Prozessoren 200 umfassen kann.

Prozessor 200 führt Anweisungen aus, die in Programmspeicher 201 gespeichert sind, und speichert beispielsweise Zwischenergebnisse oder Ähnliches in Hauptspeicher 202. Die Verwendung eines (zusätzlichen) graphischen Prozessors kann beispielsweise zur Ausführung von Algorithmen zum maschinellen Lernen und/oder künstlichen neuronalen Netzwerken vorteilhaft sein.

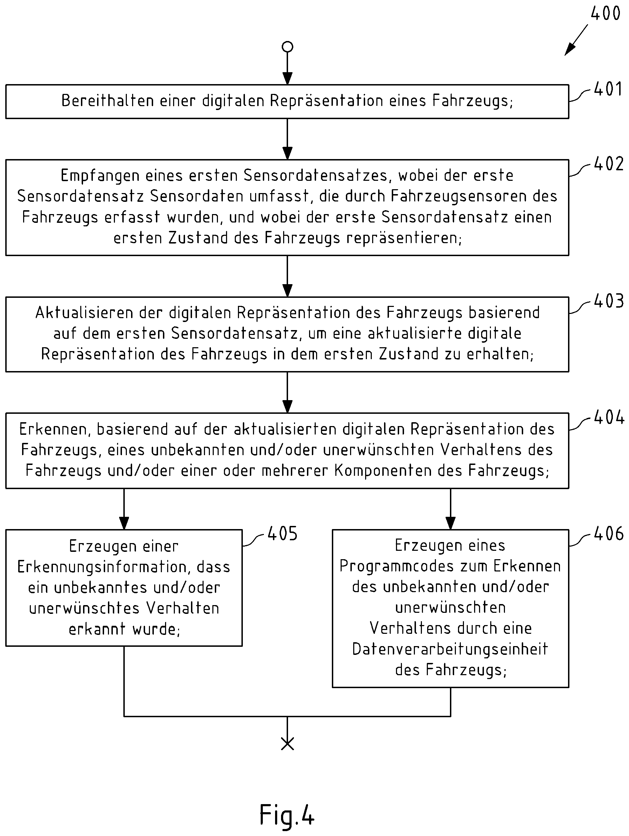

In Programmspeicher 201 sind beispielsweise Anweisungen gespeichert, die den Prozessor 200, wenn er die Programmanweisungen ausführt, veranlassen, das Verfahren gemäß der Erfindung (z.B. das Verfahren gemäß dem in Fig. 4 dargestellten Flussdiagramm 4) zumindest teilweise auszuführen. Im Folgenden wird ferner davon ausgegangen, dass in dem Programmspeicher 201 ein Erkennungsmodell in Form eines künstlichen neuronalen Netzwerks gespeichert ist, das durch maschinelles Lernen trainiert wird und während des Verfahrens gemäß der Erfindung genutzt werden kann, um ein unbekanntes und/oder unerwünschtes Verhalten eines Sattelaufliegers und/oder einer oder mehrerer Komponenten des Sattelaufliegers zu erkennen.

Außerdem enthält Programmspeicher 201 für jeden der Sattelauflieger 101, 102 und 103 des in Fig. 1 dargestellten Systems 1 jeweils eine digitale Repräsentation.

Programmspeicher 201 enthält ferner beispielsweise das Betriebssystem des Servers 2, das beim Starten des Servers 3 zumindest teilweise in Hauptspeicher 202 geladen und vom Prozessor 200 ausgeführt wird. Insbesondere wird beim Starten des Servers 2 zumindest ein Teil des Kerns des Betriebssystems in den Hauptspeicher 202 geladen und von Prozessor 200 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung des Servers 2 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 202 und Programmspeicher 201 können auch als ein Speicher ausgebildet sein. Alternativ können Hauptspeicher 202 und/oder Programmspeicher 201 jeweils durch mehrere Speicher gebildet werden. Ferner können Hauptspeicher 202 und/oder Programmspeicher 201 auch Teil des Prozessors 200 sein.

Prozessor 200 steuert die Kommunikationsschnittstelle 203, welche beispielsweise eingerichtet ist über eine Verbindung in einem Kommunikationsnetzwerk Informationen mit einer entfernten Vorrichtung auszutauschen (z.B. zu senden und/oder zu empfangen). Im Folgenden wird beispielhaft davon ausgegangen, dass die Kommunikationsschnittstelle 203 eine drahtgebundene Kommunikationsschnittstelle ist. Ein Beispiel für eine drahtgebundene Kommunikationsschnittstelle ist eine Ethernet-Schnittstelle. Wie oben offenbart, ist Ethernet zum Beispiel in den Standards der IEEE-802.3-Familie spezifiziert. Zum Beispiel kann der Server 2 die Kommunikationsschnittstelle 203 verwenden, um Informationen (z.B. Telematikdatensätze und/oder Softwareupdates und/oder Benutzerinformationen) über die Kommunikationspfade 107 bis 109 und 111 mit den Sattelaufliegern 101 bis 103 und der Benutzervorrichtung 110 des in Fig. 1 dargestellten Systems 1 auszutauschen (z.B. zu senden und/oder zu empfangen).

Die Komponenten 200 bis 203 des Servers 2 sind beispielsweise über einen oder mehrere Bussysteme (z.B. ein oder mehrere serielle und/oder parallele Busverbindungen) kommunikativ und/oder operativ miteinander verbunden.

Es versteht sich, dass der Server 2 neben den Komponenten 200 bis 203 weitere Komponenten (z.B. eine Benutzerschnittstelle) umfassen kann.

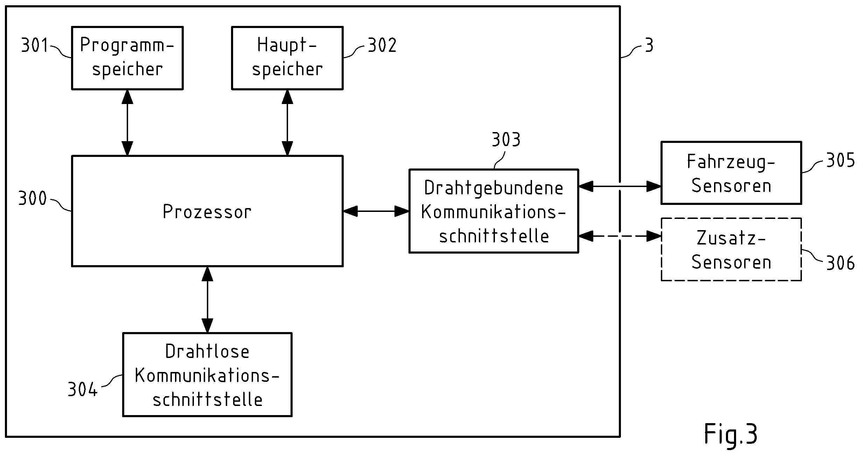

Fig. 3 zeigt eine schematische Darstellung einer beispielhaften Ausführungsform einer Datenverarbeitungseinheit 3 für ein Fahrzeug gemäß der Erfindung. Im Folgenden wird beispielhaft davon ausgegangen, dass die Datenverarbeitungseinheit 3 eine Telematikeinheit ist und die Telematikeinheiten 3-1, 3-2 und 3-3 der Sattelauflieger 101, 102 und 103 des in Fig. 1 dargestellten Systems 1 dieser in Fig. 3 dargestellten Telematikeinheit 3 entsprechen.

Die Telematikeinheit 3 umfasst einen Prozessor 300 und verbunden mit dem Prozessor 300 einen ersten Speicher als Programmspeicher 301, einen zweiten Speicher als Hauptspeicher 302 und eine drahtgebundene Kommunikationsschnittstelle 303 sowie eine drahtlose Kommunikationsschnittstelle 304.

Der Prozessor 300 führt Anweisungen aus, die in Programmspeicher 301 gespeichert sind, und speichert beispielsweise Zwischenergebnisse oder Ähnliches in Hauptspeicher 302. Es versteht sich, dass die Telematikeinheit 3 auch mehrere Prozessoren 100 umfassen kann.

In dem Programmspeicher 301 ist beispielsweise das Betriebssystem der Telematikeinheit 3 gespeichert, das beim Starten der Telematikeinheit 3 zumindest teilweise in Hauptspeicher 302 geladen und vom Prozessor 300 ausgeführt wird. Insbesondere wird beim Starten der Telematikeinheit 3 zumindest ein Teil des Kerns des Betriebssystems in den Hauptspeicher 302 geladen und vom Prozessor 300 ausgeführt.

Wie oben im Detail offenbart ist, ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Telematikeinheit 3 zur Datenverarbeitung.

Neben dem Betriebssystem der Telematikeinheit 3 kann der Programmspeicher 301 auch weitere Anweisungen enthalten. Beispiele für ein solche Anweisungen sind beispielsweise Anweisungen eines Computerprogramms wie eines Telematikprogramms und/oder eines Diagnoseprogramm. Die Anweisungen des Telematikprogramms, veranlassen den Prozessor 300, wenn er die Anweisungen ausführt, beispielsweise über die drahtgebundene Kommunikationsschnittstelle 303 empfangene Sensordaten (z.B. im Programmspeicher 301 und/oder Hauptspeicher 302) zwischenzuspeichern und mit einer bestimmten Häufigkeit (z.B. mit einer bestimmten Frequenz und/oder in bestimmten Zeitabständen) einen Telematikdatensatz, der die Sensordaten enthält, die empfangen wurden, nachdem der vorherige Telemaitkdatensatz gesendet wurde, über die drahtlose Kommunikationsschnittstelle 304 an den Server 2 zu senden. Neben den Sensordaten kann der jeweilige Telematikdatensatz auch weitere Informationen (z.B. Zustandsinformationen und/oder Fehlercodes) enthalten. Die Anweisungen des Diagnoseprogramms, veranlassen den Prozessor 300, wenn er die Anweisungen ausführt, beispielsweise einen unbekannten und/oder unerwünschtes Verhalten basierend auf über die drahtgebundene Kommunikationsschnittstelle 303 empfangene Sensordaten zu erkennen und einen entsprechenden Fehlercode auszugeben.

Es versteht sich, dass das Telematikprogramm und das Diagnoseprogramm auch Funktionen eines gemeinsamen Computerprogramms sein können. Alternativ können die Funktionen des Telematikprogramms und des Diagnoseprogramms auf mehrere Computerprogramme verteilt sein.

Der Hauptspeicher 302 und der Programmspeicher 301 können auch als ein Speicher ausgebildet sein. Alternativ können der Hauptspeicher 302 und/oder der Programmspeicher 301 jeweils durch mehrere Speicher gebildet werden. Ferner können der Hauptspeicher 302 und/oder der Programmspeicher 301 auch Teil des Prozessors 100 sein.

Der Prozessor 300 steuert die drahtgebundene Kommunikationsschnittstelle 303, welche beispielsweise eingerichtet ist, Informationen mit anderen Komponenten des jeweiligen Sattelaufliegers auszutauschen (z.B. zu senden und/oder zu empfangen). Die Kommunikationsschnittstelle 303 ist beispielsweise als Ethernet-, CAN-, K-Leitungs-, LIN- oder Flexray-Schnittstelle ausgebildet. Sie ist beispielsweise eingerichtet zur drahtgebundenen Kommunikation mit einem oder mehreren Fahrzeugsensoren 305 und optionalen Zusatzsensoren 306 des jeweiligen Sattelaufliegers über ein Ethernet-Netzwerk oder ein CAN-, K-Leitungs-, LIN- oder Flexray-Bussystem des jeweiligen Sattelaufliegers. Zum Beispiel kann die Telematikeinheit 3 durch die drahtgebundene Kommunikationsschnittstelle 303 Informationen an die Fahrzeugensoren 305 und/oder Zustatzsensoren 306 senden und/oder von diesen empfangen. Wie oben offenbart, ist Ethernet zum Beispiel in den Standards der IEEE-802.3-Familie spezifiziert. CAN ist in den Standards der ISO 11898-Familie, K-Leitung ist in den Standards ISO 9141 und ISO 14230-1, LIN ist in den Standards der ISO 17987-Familie und FlexRay in den Standards der ISO 17458-Familie spezifiziert.

In Fig. 3 sind die die Sensoren 305 und 306 nicht als Teil der Telematikeinheit 3 dargestellt. Es versteht sich jedoch, dass die die Sensoren 305 und 306 auch vollständig oder teilweise Teil der Telematikeinheit sein kann/können.

Beispiele für die Fahrzeugsensoren 305 und/oder die Zusatzsensoren 306 sind ein Temperatursensor und/oder ein Batteriesensor und/oder ein Spannungssensor und/oder ein Stromsensor und/oder ein Türsensor und/oder ein Tankfüllstandssensor und/oder ein Reifendrucksensor und/oder ein Gewichtssensor. Es versteht sich, dass die Fahrzeugsensoren 305 und/oder die Zusatzsensoren 306 nicht auf diese Sensortypen beschränkt sind.

Die Fahrzeugsensoren 305 und/oder die Zusatzsensoren 306 können zumindest teilweise Teil des jeweiligen Sattelaufliegers sein.

Ferner weist die Telematikeinheit 3 eine durch den Prozessor 300 gesteuerte drahtlose Kommunikationsschnittstelle 304 auf, über welche Informationen über einen drahtlosen Kommunikationspfad mit einer entfernten Vorrichtung wie dem Server 2 in dem in Fig. 1 dargestellten System ausgetauscht (z.B. gesendet und/oder empfangen) werden können. Die drahtlose Kommunikationsschnittstelle 304 ist beispielsweise als WLAN- und/oder Mobilfunk-Schnittstelle ausgebildet. WLAN ist, wie oben offenbart, in den Standards der IEEE 802.1 1 -Familie standardisiert. Unter Mobilfunk sollen insbesondere Mobilfunkkommunikationssysteme wie ein 2G/3G/4G/5G/6G-Kommunikationssystem verstanden werden. Die Spezifikationen der 2G, 3G, 4G, 5G oder 6G Mobilfunkkommunikationssysteme werden derzeit durch das 3rd Generation Partnership Project (3GPP) entwickelt und können derzeit im Internet unter https://www.3gpp.org/ abgerufen werden.

Die Komponenten 300 bis 304 der Telematikeinheit 3 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Telematikeinheit 3 neben den dargestellten Komponenten weitere Komponenten (z.B. eine Benutzerschnittstelle) umfassen kann.

Fig. 4 zeigt ein Flussdiagramm 400 einer beispielhaften Ausführungsform eines Verfahrens gemäß der Erfindung. Im Folgenden wird beispielhaft davon ausgegangen, dass das Verfahren durch den Server 2, der Teil des in Fig. 1 dargestellten Systems 1 ist, ausgeführt wird.

In einem Schritt 401 wird eine digitalen Repräsentation eines Fahrzeugs bereitgehalten. Dabei soll unter dem Bereithalten einer digitalen Repräsentation eines Fahrzeugs soll beispielsweise verstanden werden, dass eine solche digitale Repräsentation in einem Speicher des Servers 2 gespeichert ist.

Wie oben offenbart, enthält Programmspeicher 201 für jeden der Sattelauflieger 101, 102 und 103 des in Fig. 1 dargestellten Systems 1 jeweils eine digitale Repräsentation. Jede der digitalen Repräsentationen soll im Folgenden als ein digitales Modell, ein sogenannter digitaler Zwilling, des jeweiligen Sattelaufliegers verstanden werden. Jeder digitale Zwilling repräsentiert zum Beispiel den Grundzustand und den Betriebszustand des jeweiligen Satelaufliegers.

Unter dem Grundzustand des jeweiligen Sattelaufliegers soll, wie oben im Detail offenbart, beispielsweise eine Beschreibung (z.B. eine Repräsentation) von (z.B. ausgewählten) Eigenschaften des Fahrzeugs, die sich typischerweise im Betrieb des Fahrzeugs nicht verändern, verstanden werden. Zum Beispiel kann der Grundzustand im Wesentlichen die unveränderlichen Eigenschaften des jeweiligen Sattelaufliegers, die sich aus der Konfiguration und/oder Produktion des jeweiligen Sattelaufliegers ergeben, beschreiben. Es handelt sich dabei beispielsweise um technische Daten des jeweiligen Sattelaufliegers (wie Tankinhalt, Batteriekapazität, Reifengröße und/oder Fahrzeuggewicht) und/oder Betriebspunkte des jeweiligen Sattelaufliegers (wie Soll-Batteriespannung, maximale Batterietemperatur, Soll-Reifendruck und/oder maximale Achslast). Im Folgenden wird beispielhaft davon ausgegangen, dass die Sattelauflieger 101, 102 und 103 des Systems 1 die gleiche Konfiguration aufweisen und dass ihre digitalen Zwillinge jeweils den gleichen Grundzustand repräsentieren.

Unter dem Betriebszustand des jeweiligen Sattelaufliegers soll, wie oben im Detail offenbart, beispielsweise eine Beschreibung (z.B. eine Repräsentation) von (z.B. ausgewählten) Eigenschaften des Fahrzeugs, die sich typischerweise im Betrieb des Fahrzeugs verändern, verstanden werden. Solche veränderlichen Eigenschaften werden beispielsweise durch den Gebrauch des jeweiligen Sattelaufliegers und/oder den Verbrauch von Betriebsmitteln während des Betriebs des jeweiligen Sattelaufliegers bestimmt. Es handelt sich dabei beispielsweise um durch Fahrzeugsensoren im Betrieb des Fahrzeugs überwachte Eigenschaften (wie Tankfüllstand, Batteriespannung, Batterietemperatur, Reifendruck und/oder Achslast). Im Folgenden wird beispielhaft davon ausgegangen, dass der aktuelle Betriebszustand des jeweiligen Sattelaufliegers durch den letzten von der Telematikeinheit des jeweiligen Sattelaufliegers gesendeten Telematikdatensatz (z.B. durch die darin enthaltenen Sensordaten) repräsentiert wird.

In einem Schritt 402 wird ein erster Sensordatensatz empfangen, wobei der erste Sensordatensatz Sensordaten umfasst, die durch Fahrzeugsensoren des Fahrzeugs erfasst wurden, und wobei der erste Sensordatensatz einen ersten Zustand des Fahrzeugs repräsentiert.

Zum Beispiel empfängt der Server 2 in Schritt 401 über den Kommunikationspfad 107 von der Telematikeinheit 3-1 des Sattelaufliegers 101 einen ersten Telematikdatensatz, der den ersten Sensordatensatz enthält. Dementsprechend wurden die Sensordaten des ersten Sensordatensatzes durch die Fahrzeugsensoren des Sattelaufliegers 101 erfasst und repräsentieren den aktuellen Betriebszustand (d.h. in diesem Beispiel den ersten Zustand) des Sattelaufliegers 101.

In einem Schritt 403 wird die digitale Repräsentation des Fahrzeugs basierend auf dem ersten Sensordatensatz aktualisiert, um eine aktualisierte digitale Repräsentation des Fahrzeugs in dem ersten Zustand zu erhalten.

Zum Beispiel kann der Server 2 den digitalen Zwilling des Sattelaufliegers 101 in Schritt 403 basierend auf dem ersten Sensordatensatz, der in dem in Schritt 401 empfangenen ersten Telematikdatensatz enthalten ist, aktualisieren, so dass der aktualisierte digitale Zwilling den Sattelauflieger 101 in dem aktuellen Betriebszustand (d.h. in diesem Beispiel dem ersten Zustand) repräsentiert. Zum Beispiel kann der aktualisierte digitale Zwilling den in dem ersten Telematikdatensatz enthaltenen ersten Sensordatensatz enthalten.

In einem Schritt 404 wird, basierend auf der aktualisierten digitalen Repräsentation des Fahrzeugs, ein unbekanntes und/oder unerwünschtes Verhaltens des Fahrzeugs und/oder einer oder mehrerer Komponenten des Fahrzeugs erkannt.

Zum Beispiel kann der Server in Schritt 404 basierend auf dem in Schritt 403 aktualisierte digitale Zwilling ein unbekanntes und/oder unerwünschtes Verhalten des Sattelaufliegers 101 und/oder einer oder mehrerer Komponenten des Sattelaufliegers erkennen.

Wie oben im Detail offenbart, kann das Erkennen in Schritt 404 beispielsweise anhand von vorgegebenen Regeln erfolgen. Im Folgenden wird jedoch davon ausgegangen, dass das Erkennen in Schritt 404 anhand eines durch maschinelles Lernen erhaltenen Erkennungsmodells in Form eines künstlichen neuronalen Netzwerks erfolgt. Das Erkennungsmodell ist, wie oben offenbart, in dem Programmspeicher 201 des Servers 2 gespeichert und wird durch maschinelles Lernen, um ein unbekanntes und/oder unerwünschtes Verhalten eines Sattelaufliegers (z.B. des Sattelaufliegers 101) und/oder einer oder mehrerer Komponenten des Sattelaufliegers (z.B. des Sattelaufliegers 101) basierend auf einem aktualisierten digitalen Zwilling des Sattelaufliegers (z.B. dem in Schritt 403 aktualisierten digitalen Zwilling des Sattelaufliegers 101) zu erkennen.

Das Erkennungsmodell in Form des künstlichen neuronalen Netzwerks umfasst mindestens drei Schichten inklusive der Eingabeschicht und der Ausgabeschicht. Beispiele für ein solches künstliches neuronales Netzwerk sind neuronale Netzwerke mit Feedforward-Architektur, mehrschichtige Perzeptrons, Convolutional Neural Networks und/oder Recurrent Neural Networks.

Dass das Erkennen in Schritt 404 basierend auf dem aktualisierten digitalen Zwilling erfolgt, soll beispielsweise so verstanden werden, dass das Erkennungsmodell den aktualisierten digitalen Zwilling des Sattelaufliegers 101 und/oder den darin enthaltenen ersten Sensordatensatz in Schritt 404 als Eingangsdaten erhält. Als Ergebnis gibt das Erkennungsmodell Ausgangsdaten aus, die angeben, ob ein unbekanntes und/oder unerwünschtes Verhalten (oder z.B. ein bekanntes und/oder erwünschtes Verhalten) des Sattelaufliegers 101 erkannt wurde.

Zum Beispiel wird das Erkennungsmodell im Rahmen eines überwachten Lernens trainiert wird. Beim überwachten Lernen wird das Erkennungsmodell beispielsweise mit Trainingsdatensätzen trainiert, wobei für jeden Trainingsdatensatz vorgegeben ist, ob für den jeweiligen Trainingsdatensatz ein unbekanntes und/oder unerwünschtes Verhalten (oder z.B. ein bekanntes und/oder erwünschtes Verhalten) erkannt werden soll. Zum Beispiel umfasst jeder der Trainingsdatensätze, wie oben im Detail offenbart, jeweilige Sensordaten, die durch einen oder mehrere der Fahrzeugsensoren und/oder durch einen oder mehrere Zusatzsensoren eines Trainingsfahrzeugs erfasst wurden, wobei jeder der Trainingsdatensätze einen jeweiligen Zustand (z.B. einen Betriebszustand wie ein bekannter und/oder erwünschter Betriebszustand oder ein unbekannter und/oder unerwünschter Betriebszustand) des jeweiligen Trainingsfahrzeugs repräsentiert. Wenn ein Trainingsdatensatz beispielsweise einen bekannten und/oder erwünschten Betriebszustand repräsentiert, ist beispielsweise vorgegeben, dass das Erkennugnsmodell für den Trainingsdatensatz ein bekanntes und/oder erwünschtes Verhalten erkennen soll; und, wenn ein Trainingsdatensatz beispielsweise einen unbekannten und/oder unerwünschten Betriebszustand repräsentiert, ist beispielsweise vorgegeben, dass das Erkennungsmodell für den Trainingsdatensatz ein unbekanntes und/oder unerwünschtes Verhalten erkennen soll.

In Reaktion auf das Erkennen des unbekannten und/oder unerwünschten Verhaltens in Schritt 404 wird zumindest einer der im Folgenden beschriebenen Schritte 405 und 406 ausgeführt. Es versteht sich, dass auch beide Schritte 405 und 406 in Reaktion auf das Erkennen des unbekannten und/oder unerwünschten Verhaltens in Schritt 404 ausgeführt werden können. Wenn dagegen kein unbekanntes und/oder unerwünschtes Verhalten erkannt wurde, endet das Flussdiagramm 400 oder es startet von neuem.

In einem Schritt 405 wird eine Erkennungsinformation, dass ein unbekanntes und/oder unerwünschtes Verhalten erkannt wurde, erzeugt. Die Erkennungsinformation ist beispielsweise eine Benutzerinformation, die dazu dient, einen Benutzer zu informieren, dass ein unbekanntes und/oder unerwünschtes Verhalten erkannt wurde. Zum Beispiel basiert die Erkennungsinformation auf einer Ausgabe des Erkennungsmodells.

Zum Beispiel wird in Schritt 405 eine Benutzerinformation als Erkennungsinformation erzeugt, dass ein unbekanntes und/oder unerwünschtes Verhalten des Sattelaufliegers 101 erkannt wurde. Die Benutzerinformation kann der Server 2 über den Kommunikationspfad 111 an die Benutzervorrichtung 110 senden. Die Benutzervorrichtung 110 kann die Benutzerinformation dann an den Benutzer, der den Fuhrpark mit den Sattelaufliegern 101, 102 und 103 betreut, ausgeben, um ihn zu informieren, dass ein unbekanntes und/oder unerwünschtes Verhalten erkannt wurde.

In einem Schritt 406 wird ein Programmcode zum Erkennen des unbekannten und/oder unerwünschten Verhaltens durch eine Datenverarbeitungseinheit des Fahrzeugs erzeugt. Zum Beispiel basiert das Erzeugen des Programmcodes auf einer Ausgabe des Erkennungsmodells. Zum Beispiel kann das Erkennungsmodel zumindest einen Teil des Programmcodes oder eine Repräsentation zumindest eines Teils des Programmcodes ausgeben. Zum Beispiel kann das Erkennungsmodell Anweisungen in einer höheren Programmiersprache wie C++ oder Java ausgeben. Diese Anweisungen in der höheren Programmiersprache können den Programmcode oder einen Teil des Programmcodes in Form eines Quellcodes repräsentieren. Diese Anweisungen können dann im Rahmen des Erzeugens des Programmcodes mit anderen Anweisungen in der höheren Programmiersprache kombiniert und/oder kompiliert werden, um den Programmcode in Form von Maschinencode zu erzeugen.

Zum Beispiel kann der in Schritt 406 erzeugte Programmcode Anweisungen eines durch den Prozessor der Telematikeinheit 3-1 des Sattelaufliegers 101 ausführbaren Computerprogramms und/oder eines Teils eines durch den Prozessor der Telematikeinheit 3-1 des Sattelaufliegers 101 ausführbaren Computerprogramms umfassen. Bei dem Computerprogramm kann es sich beispielsweise um ein durch den Prozessor der Telematikeinheit 3-1 des Sattelaufliegers 3-1 ausführbares Diagnoseprogramm und/oder einen Teil für ein solches Diagnoseprogramm handeln.

Der in Schritt 406 erzeugte Programmcode enthält beispielsweise Anweisungen, die den Prozessor der Telematikeinheit 3-1 des Sattelauflieger 101 veranlassen, wenn er die Anweisungen ausführt, das unbekannte und/oder unerwünschte Verhalten basierend auf durch Fahrzeugsensoren des Sattelaufliegers 101 erfassten Sensordaten zu erkennen.

Der Server 2 kann den in Schritt 406 erzeugten Programmcode über den Kommunikationspfad 107 in Form eines Updates für das Diagnoseprogramm, das im Programmspeicher der Telematikeinheit 3-1 des Sattelaufliegers 101 gespeichert ist, gesendet werden. Das Update fügt die Anweisungen des Programmcodes dem Diagnoseprogramm beispielsweise derart hinzu, dass die Anweisungen des Diagnoseprogramms, den Prozessor der Telematikeinheit 3-1 des Sattelaufliegers 101, wenn er die Anweisungen ausführt, veranlassen, das unbekannte und/oder unerwünschte Verhalten zu erkennen, wenn die Telematikeinheit 3-1 über die drahtgebundene Kommunikationsschnittstelle 303 Sensordaten eines zweiten Sensordatensatzes empfängt, die den Sensordaten des ersten Sensordatensatzes zumindest im Wesentlichen entsprechen. Wenn der Prozessor der Telematikeinheit 3-1 des Sattelaufliegers das unbekannte und/oder unerwünschte Verhalten erkennt, können die Anweisungen den Prozessor ferner, wenn er die Anweisungen ausführt, dazu veranlassen, einen dem unbekannten und/oder unerwünschten Verhalten zugeordneten Fehlercode dem nächsten Telematikdatensatz, der an den Server 2 gesendet wird, hinzuzufügen.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Schritte in den einzelnen Flussdiagrammen ist nicht zwingend, alternative Abfolgen der Schritte sind denkbar - soweit nicht anders angegeben. Die Schritte können auf verschiedene Art und Weise implementiert werden, so ist eine Implementierung in Software (durch Programmanweisungen), Hardware oder eine Kombination von beidem zur Implementierung der Schritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

**1.** Verfahren ausgeführt durch einen oder mehrere Server (2), wobei das Verfahren umfasst:
- Bereithalten (401) einer digitalen Repräsentation eines Fahrzeugs (101 - 103);
- Empfangen (402) eines ersten Sensordatensatzes, wobei der erste Sensordatensatz Sensordaten umfasst, die durch Fahrzeugsensoren (305) des Fahrzeugs (101 - 103) erfasst wurden, und wobei der erste Sensordatensatz einen ersten Zustand des Fahrzeugs (101 -103) repräsentieren;
- Aktualisieren (403) der digitalen Repräsentation des Fahrzeugs (101 - 103) basierend auf dem ersten Sensordatensatz, um eine aktualisierte digitale Repräsentation des Fahrzeugs (101 - 103) in dem ersten Zustand zu erhalten;
- Erkennen (404), basierend auf der aktualisierten digitalen Repräsentation des Fahrzeugs (101 - 103), eines unbekannten und/oder unerwünschten Verhaltens des Fahrzeugs (101 -103) und/oder einer oder mehrerer Komponenten des Fahrzeugs (101 - 103);
in Reaktion auf das Erkennen des unbekannten und/oder unerwünschten Verhaltens:
- Erzeugen einer Erkennungsinformation, dass ein unbekanntes und/oder unerwünschtes Verhalten erkannt wurde; und/oder
- Erzeugen eines Programmcodes zum Erkennen des unbekannten und/oder unerwünschten Verhaltens durch eine Datenverarbeitungseinheit (3) des Fahrzeugs (101 - 103).

**2.** Verfahren nach Anspruch 1, wobei das Verfahren ferner zumindest einen der folgenden Schritte umfasst:
- Ausgeben oder Bewirken des Ausgebens der Erkennungsinformation an einen Benutzer und/oder zur Weiterverarbeitung;
- Bereitstellen der Erkennungsinformation zum Ausgeben an einen Benutzer:
- Ausgeben und/oder Bereitstellen der Erkennungsinformation zur Weiterverarbeitung;
- Senden des Programmcodes an das Fahrzeug (101 - 103) und/oder an eine Vielzahl von Fahrzeugen (101 - 103);
- Bereitstellen des Programmcodes zum Abrufen durch das Fahrzeug (101 - 103) und/oder eine Vielzahl von Fahrzeugen (101 - 103);

**2.** Verfahren nach Anspruch 1, wobei der erste Sensordatensatz zumindest Sensordaten eines oder mehrerer Fahrzeugsensoren (305) der folgenden Fahrzeugsensortypen umfasst:
- Temperatursensor;
- Batteriesensor;
- Spannungssensor;
- Stromsensor;
- Türsensor;
- Tankfüllstandssensor;
- Reifendrucksensor;
- Gewichtssensor.

**3.** Verfahren nach einem der Ansprüche 1 und 2, wobei das Erkennen des unbekannten und/oder unerwünschten Verhaltens anhand eines durch maschinelles Lernen erhaltenen Erkennungsmodells erfolgt.

**4.** Verfahren nach Anspruch 3, wobei das Erkennungsmodell im Rahmen eines überwachten Lernens trainiert wird.

**5.** Verfahren nach einem der Ansprüche 3 und 4, wobei das Verfahren ferner umfasst:
- Trainieren des Erkennungsmodells mit Trainingsdatensätzen, wobei jeder der Trainingsdatensätze jeweilige Sensordaten umfasst, die durch die Fahrzeugsensoren (305) und durch Zusatzsensoren (306) eines Trainingsfahrzeugs erfasst wurden, und wobei jeder der Trainingsdatensätze einen jeweiligen Zustand des jeweiligen Trainingsfahrzeugs repräsentiert.

**6.** Verfahren nach Anspruch 5, wobei zumindest einer der Trainigsdatensätze zumindest Sensordaten eines oder mehrerer von den Fahrzeugsensoren unterschiedlicher Zusatzsensoren (306) umfasst.

**7.** Verfahren nach einem der Ansprüche 3 bis 6, wobei das Erkennungsmodell die aktualisierte digitale Repräsentation des Fahrzeugs (101 - 103) als Eingangsdaten erhält, und/oder wobei das Erkennungsmodell eine Repräsentation des unerwarteten Verhaltens ausgibt.

**8.** Verfahren nach einem der Ansprüche 3 bis 7, wobei das Erzeugen des Programmcodes auf einer Ausgabe des Erkennungsmodells basiert, und/oder wobei das Erkennungsmodel eine Repräsentation zumindest eines Teils des Programmcodes ausgibt.

**9.** Verfahren nach einem der Ansprüche 1 bis 8, wobei der Programmcode eingerichtet ist, die Datenverarbeitungseinheit (3) des Fahrzeugs (101 - 103) zu veranlassen, den unbekannten Zustand zumindest dann zu erkennen, wenn die Datenverarbeitungseinheit (3) einen zweiten Sensordatensatz erhält, wobei der zweite Sensordatensatz Sensordaten umfasst, die durch Fahrzeugsensoren (305) des Fahrzeugs (101 - 103) erfasst wurden, und wobei die Sensordaten des zweite Sensordatensatzes den Sensordaten des ersten Datensatzes zumindest im Wesentlichen entsprechen.

**10.** Verfahren nach einem der Ansprüche 1 bis 9, wobei das unbekannte und/oder unerwünschte Verhalten mit einem unbekannten Fehlerzustand des Fahrzeugs (101 - 103) und/oder der Komponente(n) des Fahrzeugs (101 - 103) assoziiert ist

**11.** Verfahren nach einem der Ansprüche 1 bis 10, wobei das Verfahren ferner umfasst:
- Zuordnen eines Fehlercodes zu dem unbekannten und/oder unerwünschten Verhalten.

**12.** Verfahren nach einem der Ansprüche 1 bis 11, wobei das Fahrzeug ein Nutzfahrzeuganhänger (101 - 103) ist.

**13.** Computerprogramm umfassend Programmanweisungen, die dazu ausgebildet sind, bei Ausführung durch mindestens einen Prozessor (200) eines Servers (2), den Server (2) zu veranlassen, das Verfahren nach einem der Ansprüche 1 bis 12 auszuführen, wobei der Server (2) veranlasst wird, das Verfahren alleine oder in Kooperation mit einem oder mehreren weiteren Servern auszuführen.

**14.** Server (2) umfassend Mittel eingerichtet zur Ausführung des Verfahrens nach einem der Ansprüche 1 bis 12, wobei die Mittel (200-203) des Servers (2) eingerichtet sind, das Verfahren alleine und/oder in Kooperation mit einem oder mehreren weiteren Servern auszuführen.

**15.** System umfassend:
- zumindest einen Server (2) nach Anspruch 14; und
- das Fahrzeug (101 - 103).
